Europäisches Patentamt

European Patent Office

Office européen des brevets

(11) Publication number: **0 243 625**
**A2**

## (12) EUROPEAN PATENT APPLICATION

(21) Application number: **87103372.6**

(22) Date of filing: **10.03.87**

(51) Int. Cl.⁴: **H02P 6/02** , G11B 19/247

(30) Priority: **28.04.86 US 856873**

(43) Date of publication of application:
**04.11.87 Bulletin 87/45**

(84) Designated Contracting States:
**DE FR GB**

(71) Applicant: **International Business Machines Corporation**
**Old Orchard Road**
**Armonk, N.Y. 10504(US)**

(72) Inventor: **Korecky, James Joseph**
**224 East Mountain View Avenue**
**Longmont Colorado 80501(US)**
Inventor: **Resman, John Boris**
**2000 46th Street N.W.**
**Rochester Minnesota 55901(US)**

(74) Representative: **Colas, Alain**
**Compagnie IBM France Département de**
**Propriété Intellectuelle**
**F-06610 La Gaude(FR)**

(54) DC motor speed control.

(57) A DC motor is speed regulated by continuously, maintaining current in the motor windings and varying the current between a higher and a lower current level during a subsequent sector or period of rotation in accordance with the velocity sensed during the present sector or period of rotation. To obtain closer regulation, the higher and lower current levels have only a small amplitude difference and the system is adaptively controlled by sensing the number of sectors of a series of such sectors during which the higher current level is supplied to the motor. If the percentage exceeds 70%, both current levels are incrementally increased and if the percentage is less than 30%, both current levels are incrementally decreased. The regulation and adaptive control are used in two stages, initially sensing velocity during each revolution of a series of 20 revolutions and switching, when synchronized, to sensing velocity during each of 74 sectors of a series that form one revolution.

## DC MOTOR SPEED CONTROL

This invention pertains to electric motor speed regulation and more particularly, to a technique for maintaining a desired motor speed using an uninterrupted motor winding current.

Some devices, such as data disk drive spindles, need continuous, precise speed regulation for correct operation. This must be accomplished without creating electrical noise that would interfere with the minute magnetic signals that are read from and written to the disk surface. The result can be accomplished by a drive that causes the motor winding current to vary between current levels rather than turning winding current on and off in response to the sensed need for power. To be most efficient there must be a minimum variation between the current levels. This requires frequent velocity sensing and current adjustment, typically several thousand times a second.

This close control can be defeated by variations in devices due to component variation and combination at time of manufacture, temperature variation during operation and age or wear occurring during the life of the device.

In the control technique of the present invention, a DC motor has a continuous flow of current in the windings which varies between a higher current value and a lower current value. The speed is sensed frequently with the higher current applied in response to a low speed and the lower current applied in response to an increased speed. In the environment shown and described, the rotational speed of the motor is sensed about three thousand times per second. In response to the speed sensed, the motor current is varied between the selected upper and lower current levels to obtain a very closely regulated constant speed.

In addition, a record is maintained of the number of time periods during which the respective upper and lower levels are utilized for a selected number of consecutive time periods. If the number of upper or lower time periods exceeds a threshold percentage, the current levels are revised. For example, if the higher current level is used during 70% or more of the time periods, the current levels are increased to more nearly approach the desired 50% duty cycle.

As shown and described with reference to a magnetic disk drive, following an initial acceleration to the approximate operating rotational velocity, the rotational speed is sensed during each revolution in an initial operating mode and during each sector time in a second operating mode to control the application of the higher and lower current levels. The revolution mode is used initially until the rotational speed is sufficiently regulated to permit the servo identification circuitry to synchronize with the rotating disk. Thereafter the speed is adjusted during each sector time or more than 50 times during each revolution to assure constant speed through corrections that occur more than 3000 times per second. It is during this final sector mode that the system is enabled to write data to and read data from the disk. If during twenty revolutions in revolution mode, one level is used 70% or more (during 14 or more revolutions), the upper and lower current levels are each incremented or decremented to achieve an approximate 50% use of each current level. In like manner, during sector mode, if one level of current is used during 70% or more of the sectors in one revolution, the upper and lower current levels are each raised or lowered to more nearly approach a 50% duty cycle with respect to the use of each current value. In this environment, where the motor load does not vary significantly, a four bit signal is utilized to identify sixteen current levels and the upper and lower values are separated by one value, so that for example an upper current value indicated by a hex value nine and a lower current value indicated by a hex value seven may be in use. If the lower current value is used during fourteen or more of twenty consecutive revolution times, the current values are changed to those indicated by a hex eight and a hex six. Likewise, if the upper current value is used during fourteen or more of twenty consecutive revolution times, the current values are changed to those indicated by a hex eight and a hex "A".

By adaptively controlling the current levels. not only is the speed regulated from an initial operating condition at start up, but regulation is continuously maintained as conditions such as temperature reach stability. Further, variations between devices can be tolerated and as the product ages or wears, the physical changes that affect the energy load can be accommodated.

Fig. 1 is a block diagram of the spindle motor drive incorporating the present invention.

Fig. 2 is a section view of a typical disk drive including the actuator and disk assembly within the enclosure and the spindle motor.

Fig. 3 is a simplified flow diagram illustrating the three modes of spindle motor speed control and regulation.

Fig.4 is a flow diagram of the revolution mode of speed regulation and the associated adaptive control.

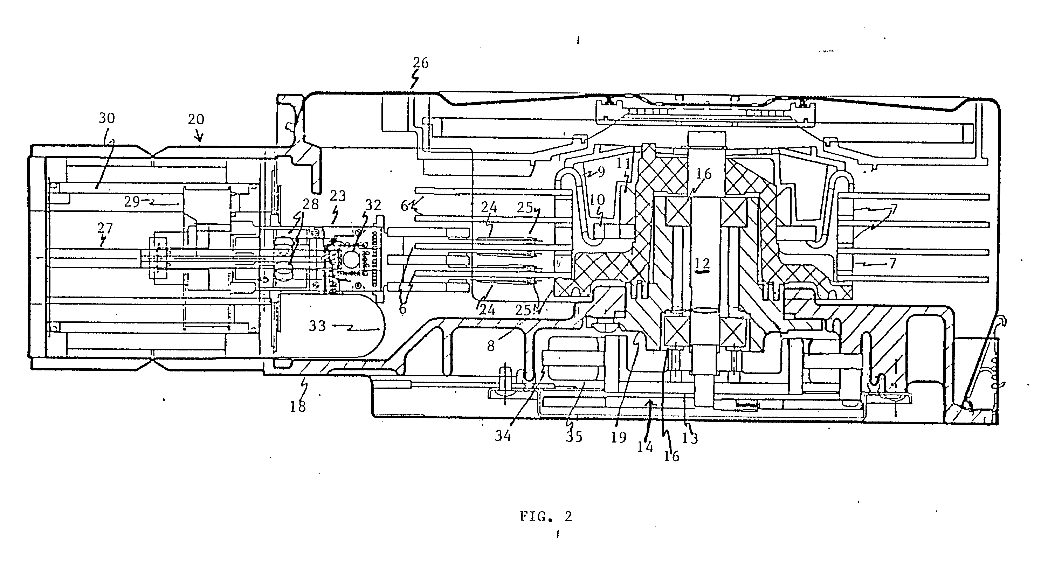

The invention is shown and described in the environment of a rigid magnetic disk drive (Fig.2) where high densities of data storage require precise control of numerous mechanical and electrical functions, including the rotational speed of the magnetic disks. The various functions of the device are controlled by a microprocessor, including the rotation of the disks 6 by spindle drive motor 14, movement of the actuator carriage 23 to position one of the transducer heads 25 over an addressed concentric data track and the reading and writing of data from or to the media surface.

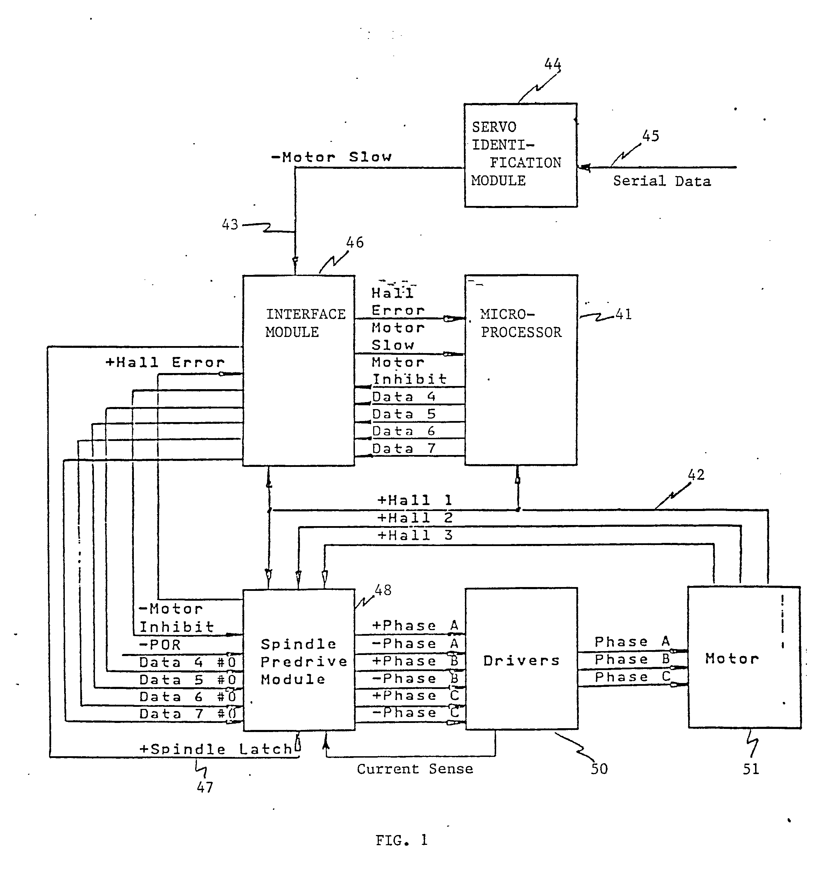

The microprocessor controls the spindle drive motor of the disk drive using sixteen values of current. These values extend from approximately zero to five amps and in the device described range from a lowest or first value of 0,05 amps to a maximum or sixteenth value of 5,3 amps with increments of 0,35 amps. As seen in Fig. 1, the motor current is supplied from the predriver module in accordance with the respective hex values indicated on the lines data 4 through data 7. Data 4 is the most significant bit and data 7 the least significant bit. When all four bits are high the maximum current is supplied and when all four bit signals are low, the minimum current is delivered to the motor.

Two ways are used to determine the rotational speed of the spindle. In one mode the microprocessor 41 receives a signal from Hall 1 sensor on line 42 during each disk revolution. In the other mode the sector information is derived from serial data received from the disks on serial data line 45. It is always synchronized. The servo ID module 44 must synchronize to this serial data so that sector information can be derived from the data. The data lines, data 4 through data 7, are half of an eight bit bus and carry the hex values established by microprocessor 41. The value of the bit combination on data 4 through data 7 are decoded by the spindle predrive module 48 to supply the selected one of the sixteen current values. Predrive module 48 activates selected drivers to supply the current value to the motor phase lines, Phase A through Phase C. During a start sequence the microprocessor transmits current values that rapidly accelerate the motor while limiting the current in the motor windings. To effect speed regulation during the revolution mode and the subsequent sector mode that is used during drive operation, current is continuously flowing in the motor at either a higher or a lower of two selected values in accordance with rotational velocity sensed. The servo ID module 44, after synchronizing with the data as the spindle speed approaches the regulated rotational velocity, decodes serial data received from the disk to determine the time for the passage of each sector and outputs a down level signal if the rotational speed is low and an up or positive signal if the speed of rotation equals or is greater than the established operating speed. Interface module 46 transmits the motor current hex value on lines data 4 through data 7 and provides a spindle latch signal on line 47 to indicate when the lines data 4 through data 7 carry valid motor current data. Spindle predriver module 48 decodes the value carried by lines data 4 through data 7 and coordinates the phase signals as a function of the signals on sensors Hall 1, Hall 2 and Hall 3. The driver circuits 50 activate the phase lines to supply current to the windings of the motor 51.

The motor inhibit line is used to turn off the motor drivers, Phase A through Phase C whenever this line or the POR (power on reset) line is low and no motor driver will turn on regardless of other outputs. The spindle latch is used to latch the four data bits into the predrive module. With this line high, any change on the data lines will change the motor current. For the data to be reliably latched into the module, + spindle latch must be high for greater than a predetermined time, such as 100 nanoseconds with the data bits stable during this period. The data must also be held for a period such as 500 nanoseconds after + spindle latch goes low. After + spindle latch is low for 500 nanoseconds changes on the data 4 through data 7 lines will not affect the motor current. The lines + Hall 1, + Hall 2 and + Hall 3 are terminated in the predrive module and are used to commutate the motor and check for a hall error. + Hall 1 is also sent to the microprocessor to enable determination of the spindle speed. The + Hall error is generated by the spindle predrive module when an illegal combination of Hall signals occur. This is an all 1's or all 0's combination. + Hall error will only be high as long as the error occurs. If for example, one Hall sensor's output transistor was blown open with the motor turning at 332 radians/second, the error would be posted 3 times a revolution for one millisecond and there will be no motor current at these times. The three outputs of the motor drive transistors, Phase A, Phase B and Phase C supply the motor phase windings and can be sourcing or sinking current to/from the motor or floating.

Fig. 2 shows a vertical section of a magnetic disk drive which illustrates the principal components of a typical drive. The disks 6 (four of which are shown) are separated by spacers 7 and retained on hub 8 by a clamping assembly including a resilient bell member 9, a rigid ring 10 and a shrink ring 11. The disk assembly is mounted on the upper portion of spindle shaft 12 while the spindle drive motor rotor 13 is secured to the lower end of the spindle shaft. DC motor 14 provides a direct drive to rotate the data disks 6 as the disk assembly, spindle shaft 12 and rotor 13 turn in unison with the inner races of bearings 16 that mount the spindle shaft through the base casting assembly. The base casting assembly includes the base casting 18 and the bearing tower 19.

The actuator assembly 20 is secured to base casting 18 with the carriage 23, suspension 24 and transducer heads 25 extending into the head-disk enclosure, defined by the base casting assembly and the cover 26, to permit the transducer portions of the heads 25 to access the disk data surfaces. The actuator carriage 23 is mounted for linear movement along cylindrical ways 27 secured to the actuator housing at each transverse side. Three pairs of rollers support carriage 23 on ways 27. Two pairs of rollers (not visible) engage the way 27 at the far side of the carriage. The roller pair 28 is longitudinally intermediate the other two pairs and engages the way (not shown) at the near side of carriage 23. One of the rollers 28 is spring biased against the cooperating way to remove any slack in the mechanical system. The carriage is driven by a voice coil wound on bobbin 29 and disposed in the working air gap 30. The carriage 23 reciprocates to move the read-write gaps of transducer heads 25 from track to track along a radius of the associated surface of the disks 6. The transducers that read and write data at the disk surface are electrically connected to the arm electronics module 32 on carriage 23 and from there to the electrical circuits (not shown) exterior of the disk enclosure by conductors that extend along the surface of the flat flexible member 33.

The spindle drive motor 14 is positioned outside the disk enclosure and includes a permanent magnet rotor 13 attached to spindle shaft 12 and a surrounding stator, including a core 34 and windings 35 which are stationary, bolted to base casting 18. It is essential that the motor speed be closely regulated to assure that a constant condition exists with respect to the passage of concentric tracks on the disk surface past the transducing gap of the associated transducer head 25.

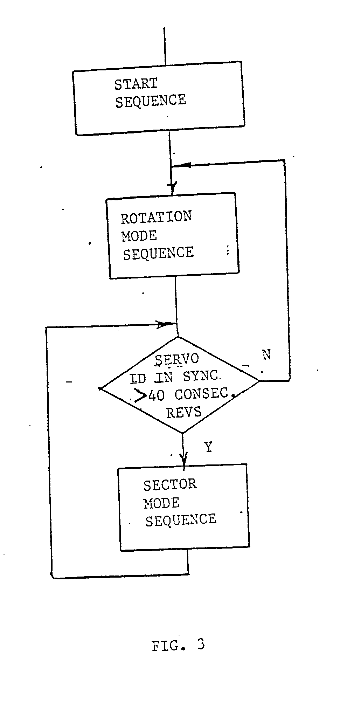

As illustrated in Fig. 3 there are three stages or modes of control of the spindle motor drive. Initially, during a start sequence, the spindle is accelerated rapidly to the operating rotational velocity. When the operating rotational speed has been achieved during three successive revolutions, control is handed over to a rotation mode sequence that controls the spindle motor drive current until the sector ID module circuitry has been in sync with the serial data read from the disk surface for in excess of 40 consecutive revolutions. With the servo ID module circuity in sync for more than 40 revolutions, control is placed in sector mode. In sector mode, the motor speed is sensed during each sector time and the higher or lower of two current values applied during the next subsequent sector time in accordance with the sensing of high or low motor speed. With approximately 70 sectors per track or revolution, speed is more closely regulated than in revolution mode where speed is sensed from Hall 1 and correction occurs once per revolution in accordance with speed sensed during the preceding revolution.

The spindle drive motor is started under control of the microprocessor 41, using a start sequence, to afford high initial acceleration so that the transducer heads will fly quickly with minimal wear of either heads or disks while not using excessive power. The average power supply current delivered to the motor increases with speed if the current flowing in the motor is held at a constant value. The motor current is first set to the highest value of the sixteen values available using the four bit command on data lines 4 through 7 until the heads are safely flying above the disks. For the file described herein, this speed is approximately 80 radians per second. Since the average supply current has not risen too high at this speed and a safety factor is wanted, the motor current is not reduced until the disk speed is approximately 120 radians per second. The motor current is then reduced by one unit (about 0,35 amps.). As the motor current is reduced by one unit, the average supply current drops immediately and gradually ramps back up as the motor continues to pick up speed. The microprocessor uses Hall 1 to determine the velocity of the motor. At predetermined velocities the motor current is again reduced by one unit. This process of reducing the motor current as the motor accelerates continues until the desired velocity is reached.

Upon attaining the desired velocity during three consecutive revolutions, the microprocessor provides two modes of speed control or speed regulation. The first is revolution control wherein speed is measured during each revolution, altered when necessary between two current values during a subsequent revolution and the current values changed adaptively after a predetermined number of revolutions in accordance with the duty cycle. This mode of controlling the current supplied once per revolution is continued until the servo ID module circuitry can be brought into sync with the servo data appearing once during each sector. In the example described, the duty cycle is examined after 20 revolutions and the current values changed if the duty cycle using the present current values falls below 30% or exceeds 70%. The revolution mode uses the Hall 1 sensor signal occurring once per revolution which is communicated to the microprocessor 41 and the interface module 46 in addition to the spindle predrive module 48. The second mode of speed control is entered when the servo circuitry comes into sync with the servo data in each successive sector on a track and is used during drive operation to achieve the closest regulation during the reading and writing of data. In this mode speed is measured during the time of each sector passage (74 times per revolution in the environment described) and the current values are adaptively controlled after each revolution based on duty cycle. During sector mode, the servo identification module (SID) detects sectors and the time for the passage of a single sector. If the time for a sector passage is equal to or less than a predetermined value, a positive value is transmitted on the line and if the time exceeds the predetermined value a motor slow signal appears on line.

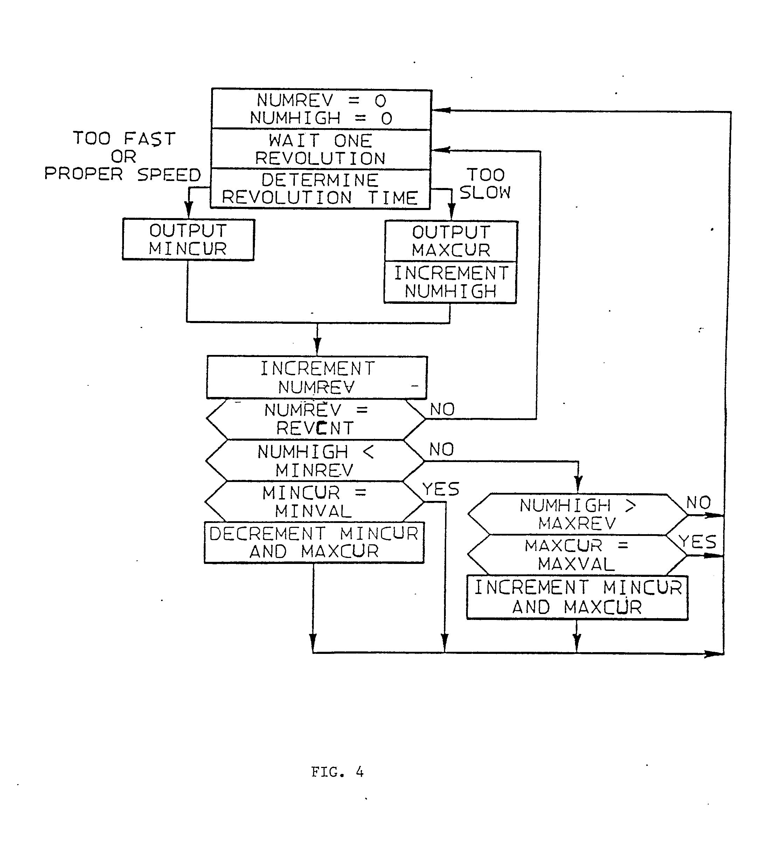

Fig. 4 illustrates microprocessor speed control during revolution mode. Initially, the counter recording the number of revolutions (NUMREV) and the counter recording the number of revolutions during which the higher current level is applied (NUMHIGH) are set to zero. The system waits one revolution and determines the time duration for one revolution. If the time for one revolution indicates that the speed is equal to or exceeds the correct rotational speed, the microprocessor outputs bit values on lines data 4 through data 7 representing the lower or minimum of the two current values (MINCUR) and if a greater revolution time value is sensed, indicating a slower than desired rotational speed, the microprocessor outputs bit values on lines data 4 through data 7 representing the greater or maximum (MAXCUR) of the two current values being used and increments the counter (NUMHIGH) recording the number of revolutions during which the higher current value is being used. After each revolution, the NUMREV counter is incremented and the incremented count compared to the predetermined number of revolutions (REVCNT) associated with the adaptive control of the values of high current (MAXCUR) and low current (MINCUR) applied.

If NUMREV is less than REVCNT, the speed control is recycled to wait one revolution and again adjust the current as necessary. When NUMREV equals REVCNT, the adaptive control cycle is invoked to determine whether the MAXCUR and MINCUR values should be altered. In the example described the preferred duty cycle is 50%; however, between 30% and 70% duty cycle no adjustment is made. If the number of high current revolutions is greater than 70% or fewer than 30%, the current values (MAXCUR and MINCUR) are changed. In the example, using 20 revolutions, if the NUMHIGH is more than 14 or less than six the current values are changed. When NUMREV equals REVCNT, the NUMHIGH is compared to the minimum number of revolutions (MINREV). If MINREV is less than six, indicating a less than 30% duty cycle and the minimum current is not at the lowest of the sixteen selectable values (MINVAL), both the MINCUR and MAXCUR are decremented one value within the sixteen selectable values. If the NUMHIGH is greater than the 70% duty cycle (14 of the 20 revolutions) and the MAXCUR is not at the highest current value (MAXVAL) of the sixteen selectable values, both MINCUR and MAXCUR are incremented one value within the sixteen selectable values. If the duty cycle is between 30% and 70%, the MINVAL is in use with a duty cycle exceeding 70% or the MAXVAL is in use with a duty cycle of less than 30%, no current value adjustment is made. Thereafter the NUMREV and NUMHIGH counters are reset to zero and the cycle of operation repeated.

The revolution mode of operation shown in Fig. 4 continues until the speed is regulated to a sufficiently constant value to permit the circuitry of servo identification module 44 (SID) to come into sync with data received from the rotating disk. When this synchronization occurs, the speed control shifts from the initial revolution mode to sector mode. The operation in sector mode is identical to revolution mode; however, much closer speed regulation can be maintained since, with 74 sectors on a track, the current correction occurs 74 times per revolution and the current upper and lower values are adjusted as necessary each revolution rather than after 20 revolutions.

Sector mode operates in a manner identical to revolution mode, but counts 74 sectors during a revolution rather than 20 consecutive revolutions. During sector mode where the disk has 74 sectors per track, the number of sectors are counted until the count (REVCNT) equals 74 and the wait period is of one sector duration rather than one revolution. If the number of sectors during which high current is applied (NUMHIGH) is less than 30 percent (22 or fewer sectors) and the system is not operating at the minimum current (MINVAL) the current values are each decremented. If the number of sectors during which high current is applied (NUMHIGH) is greater than 70 percent (52 or more sectors), and the maximum current (MAXCUR) is not being used as the high current value, both current values are incremented. The speed regulation is effected by varying between the high and low current values 74 times per revolution rather than once each revolution and the current values are adaptively controlled after one revolution rather than after 20 revolutions. Thus, during operation of the disk drive, when actual read and write functions occur, the rotational velocity of the disks is very closely regulated.

## Claims

1. A DC motor speed control for maintaining motor output at a constant rotational speed using a continuous current in the motor windings which is varied between a higher first current value and a second lesser current value, characterized in that it comprises:

-velocity sensing means for obtaining a sequence of velocity values during a succession of events;

switching means for supplying said first current value to said windings when said sensed velocity value is below a first threshold and supplying said second current value when said sensed velocity value exceeds a second threshold; and

current value changing means for decreasing at least one of said first and second current values to a lower value if the number of lower current cycles exceeds a third threshold percentage during said sequence of events and for increasing at least one of said first and second current values to a higher value if the number of lower current cycles is less than a fourth threshold percentage during said sequence of events.

2. The motor speed control of claim 1 wherein said motor is connected to rotate a data disk having concentric tracks thereon and wherein each event is the passage of a sector on one of said tracks and the succession of events is a rotation of the disk.

3. The motor speed control of claim 2 wherein said current value changing means decreases both first and second current values when said third threshold percentage of lower current cycles is exceeded and increases both first and second current values when the number of lower current cycles is less than said fourth threshold percentage.

4. The motor speed control of claim 3 wherein said first and second thresholds are a common value equal to said constant rotational speed.

5. A DC motor wherein speed regulation is maintained to sustain a selected velocity by a continuous current in the

windings of said motor which is switched between an upper current value and a lower current value in response to velocity values sensed during each of a sequence of events comprising control means for switching said current supply to said upper current value when said sensed velocity value drops below a first threshold velocity value and for switching said current supply to said lower current value when a second threshold value is exceeded; and

current value changing means for decreasing at least one of said upper current value and said lower current value to a lower current value when the number of events of said sequence during which said lower level current is supplied to said motor windings exceeds a first percentage and for increasing at least one of said upper current value and said lower current value when the number of events of said sequence during which said lower current value is supplied to said motor windings is less than a second percentage.

6. The DC motor of claim 5 which is connected to rotate a data disk having concentric tracks thereon and wherein each event is the passage of a sector on one of said tracks and said succession of events is a revolution of said disk.

7. The DC motor of claim 6 wherein said current value changing means decreases both said upper current value and said lower current value when said first percentage is exceeded and increases both said upper current value and said lower current value when the number of events during which the lower level current is applied is less than said second percentage.

8. The DC motor of claim 7 wherein said first threshold value and said second threshold value are common and equal to said selected velocity.

9. In a data disk drive wherein data is stored in sectors on parallel tracks on data disks and the data disks are mounted on a spindle rotated by a direct drive DC motor which has continuously flowing electric current, a speed control system comprising

means for periodically sensing rotational velocity during recurring periods;

selecting means for supplying a first current value to said motor when said rotational velocity exceeds a first speed and supplying a second, higher current value when said rotational velocity is less than a second speed;

means for determining the number of periods during which said first current value was used during a selected number of said recurring periods; and

current value changing means for decreasing at least one of said first and second current values if said first current value occurred during a first number of said selected number of periods, said first number exceeding half said selected number and increasing at least one of said first and second current values if said first current value occurred during fewer than a second number of said selected number of periods, said second number being less than half said selected number.

10. The data disk drive motor speed control system of claim 9 wherein said first speed is equal to said second speed.

11. The data disk drive motor speed control system of claim 10 wherein said current value changing means decrements both said first and second current values when said first number is attained and increments both said first and second current values if said second number is not exceeded.

12. The data disk drive motor speed control system of claim 11 wherein said control system has two operating modes, a first operating mode during the means for periodically sensing rotational velocity senses recurring periods of one revolution each during a selected number of consecutive revolutions and a second operating mode during which the means for periodically sensing rotational velocity senses recurring periods of one data sector during a consecutive number of consecutive sectors; and

said control system further comprises switching means for changing from said first mode to said second mode when a predetermined condition is achieved.

13. The data disk drive motor speed control system of claim 12 wherein during said second operating mode the selected number of recurring periods is the data sector times occurring during a single revolution of said disks.

14. The method of adaptively controlling a DC motor speed regulation system wherein current is continuous to the windings of said motor at one of a higher and a lower current levels during a series of sectors or angles of rotation by sensing velocity during a sector and delivering said higher or lower current level to said windings during a subsequent sector of rotation in accordance with said sensed velocity comprising

determining the number of sector distances of rotation during which one of said higher and lower current values are supplied to said motor windings during said series;

increasing at least one of said higher and lower current levels supplied to said motor windings during a subsequent series if the number of sectors during which said higher current level was supplied exceeds a first threshold percentage of said series; and

decreasing at least one of said higher and lower current levels supplied to said motor windings during a subsequent series if the number of sectors during which said higher current level was supplied during said series is less than a second threshold percentage of said series.

15. The method of adaptively controlling a DC motor speed regulation system of claim 14 wherein both said higher and lower current values are increased when said first threshold percentage is exceeded and both said higher and lower current values are decreased when the number of higher current levels is less than said second threshold percentage.

FIG. 1

FIG. 2

0 243 625

FIG. 3

FIG. 4